# EUROPEAN PATENT SPECIFICATION

(11) **EP 2 072 155 B1**
(45) Date of publication and mention of the grant of the patent: **06.07.2016**
(21) Application number: 08380071.4
(22) Date of filing: 07.03.2008
(51) Int. Cl.: B08B 7/00, B08B 7/04, B29C 33/56, B29C 33/70, B29C 33/72

(54) **Device for the preparation and cleaning of tools used for manufacturing composite material components.**
Vorrichtung zur Vorbereitung und Reinigung von Werkzeugen zur Herstellung von Verbundmaterialkomponenten.
Appareil pour la préparation et le nettoyage d'outils utilisés pour la fabrication de composants de matériaux composites.

(30) Priority: 19.12.2007 ES 200703368
(43) Date of publication of application: 24.06.2009
(73) Proprietor: Airbus Operations S.L., 28906 Getafe, Madrid (ES)
(72) Inventor: Santos Gómez, José Manuel, 28320 Pinto (Madrid) (ES); López Redondo, Ángel, 28902 Getafe (Madrid) (ES)
(74) Representative: ABG Patentes, S.L.

(56) References cited:
- EP-A- 1 985 403
- US-B1- 6 369 353

## Description

### OBJECTIVE OF THE INVENTION

The present invention refers to a device for the preparation and cleaning of tools in which the tools referred to are tools such as moulds, stocks, angles and modules which are used predominantly in the manufacture of components for the aeronautical industry. The principal objective of the invention is to automate and improve the tasks of preparation and cleaning that are normally carried out manually, thereby making it possible to clean the tools, spray them with a releasing agent and drying off this releasing agent, leaving the tools ready for use.

### BACKGROUND TO THE INVENTION

Currently, the cleaning and application of releasing agent both to stocks, angles, small modules and moulds necessary for the manufacture of components for the aeronautical industry is carried out manually, which has particular difficulties in that in order to reach an optimal level of cleanliness, invasive methods have to be used to clean particular areas of the tool. This leads to degradation of the tools and an increase in the time it takes to carry out the task, itself causing further wear of the tools.

Various possible methods for the cleaning of tools are known, such as laser as in document US6369353B1 and CO2 (dry ice). The conventional procedure for preparing the tools that are used in the manufacture of aeronautical components is as follows: using a clean cloth, some type of sponge or similar, solvents are applied to the tool. The tool is then cleaned with the clean cloths before the solvent evaporates. Next three fine, uniform coats of Frekote 700nc (z24224) releasing agent are applied at right angles to one another, with an evaporation time for the solvent between coatings of 10 to 15 minutes. It is important to avoid applying the releasing agent to the bag vacuum sealing area, and with those areas masked, the component is left to cure at room temperature for 60 minutes. When material continues to adhere to the surface of the tool in a particular area or where there are scratches that were produced during removal of mould material from the corresponding component, the following procedure is used:
1.- The area affected is marked with adhesive tape
2.- Cleaning is carried out as described above
3.- Releasing agent is applied, covering an area twice the size of the area marked.

This process, which is normally carried out manually, has disadvantages in that it is necessary to ensure that masking is fully achieved, that the releasing agent is applied correctly and that the releasing agent is dried off adequately.

### DESCRIPTION OF THE INVENTION

To achieve the objectives and avoid the disadvantages indicated above, the invention consists of a device for the preparation and cleaning of tools in which the tools referred to are tools such as moulds, stocks, angles and modules used predominantly in making components for the aeronautical industry.

By way of innovation, a procedure for doing this includes four automated phases, consisting of:
- A first phase of blowing and suction in which layers of surface resin are eliminated from the tools referred to
- A second phase of cleaning by laser and by aspiration in which the tool, on a positioner, is held under a laser head, for all the surfaces and recesses to be cleaned
- A third phase of application by spraying of a releasing agent onto the tool
- A fourth phase of drying off this releasing agent in which the laser head from the second phase is used with different settings.

The device which forms part of the invention and is used in the above mentioned procedure has a positioner on which the tool to be prepared and cleaned is placed. It is held under a robotised head with three different functional positions and into which the following three systems are integrated:
- A laser system with independent cleaning and drying functions which has numerical control programs adapted to the requirements of the particular areas of the tools to be treated. This system includes means of refrigeration and means of controlling the laser system
- A releasing agent spraying system
- A blowing and aspiration system.

The controls of the laser referred to above can include the verification, control and recording of the settings amongst which are the angle of incidence of the laser, the distance to the tool, the power of the laser, the frequency of the pulse and the temperature of the laser.

With the structure described, the invention offers various advantages, in that by using the invention it is possible to: prepare and clean the whole surface of components, irrespective of their complexity, continuing until they are completely clean; subsequently apply releasing agent by spraying, and finally dry off the releasing agent. This is all done automatically, thereby making it possible to save many hours of work, achieving an improvement in the safety and hygiene for the worker due to the absence of acetone in the cleaning process, and ensuring a much lower risk of damaging the tools.

Furthermore, by means of numerical control programs adapted to the requirements of the particular areas of the tool to be cleaned, it is possible to programme different settings for different areas, such as for example applying a higher laser intensity to areas which are scratched or drilled. In addition, cleaning by laser has two physical effects: the dirt is vaporised by sublimation, and dirt removal is also effected by thermal induction. This heating is carried out only for a few milliseconds as the pulses are powerful but very short, which makes it possible for the tool being treated to remain unaffected by the changes in temperature, as it only increases in temperature by approximately 5° each time the laser is applied to a point, even with repeated applications. Furthermore, the laser cleaning system makes it possible to avoid corrosion of the tools.

Another advantage, when the laser is used appropriately, (i.e. with the correct adjustments of power and wavelength settings necessary for cleaning a particular tool), is that the metals are not damaged or indented, thereby avoiding the erosion of the tools that is caused by manual cleaning systems. The behaviour of the laser with aluminium, steel and invar is excellent. The dilation coefficients do not affect cleaning, given that heating is minimal due to the use of short pulses (more than 110,000 per second). Furthermore, with laser cleaning, any releasing agent that may have been on the tool also disappears from the surface, and is subsequently reapplied.

Another advantage of laser cleaning is that it eliminates the accumulation of releasing agent that currently occurs on the tools and that is then transferred to the carbon fibre components, making their inspection with ultrasound difficult.

The distance of the component from the laser head to the surface to be cleaned is within the range that the laser can accommodate.

Another advantage is that the invention's procedure and the device are not contaminating as they do not produce emissions of any type, since the dust resulting from the corresponding sublimation is absorbed by an aspirator. Furthermore, the technology is silent, which means that the invention has advantages compared with cleaning with CO2.

The invention's device makes cleaning quite fast and produces a quality of finish that is far superior to that of manual cleaning.

To provide a better understanding of this descriptive report and as an integral part of the report, some drawings are provided below in which the invention is described.

### BRIEF DESCRIPTION OF THE DRAWINGS

**Figure 1****.-** This represents a schematic view in perspective of the device for preparing and cleaning tools used for manufacturing components in composite material, according to the present invention.
**Figure 2****.-** This represents an enlarged detail drawing. It is a view of the device referred to in figure 1 above and is also schematic and in perspective. It consists of a detailed view of the head of the device referred to.

### DESCRIPTION OF AN EXAMPLE OF THE INVENTION IN USE

Below is a description of one example of the invention. The numbers refer to those used in the drawings.

A procedure for the preparation and cleaning of tools used for manufacturing components in composite material for the present example of the invention is applied to moulds, stocks, angles and modules used primarily in making components for the aeronautical industry.

A procedure for the purposes of the present example includes four automated phases consisting of:
- A first phase of blowing and suction in which layers of surface resin are eliminated from the tools referred to
- A second phase of cleaning by laser and by aspiration in which the tool (3) on a positioner (4) is held under a laser head (2) for all the surfaces and recesses to be cleaned
- A third phase consisting of the application of a releasing agent onto the tool by spraying (3)
- A fourth phase of drying off this releasing agent in which the laser head from the second phase is used with different settings.

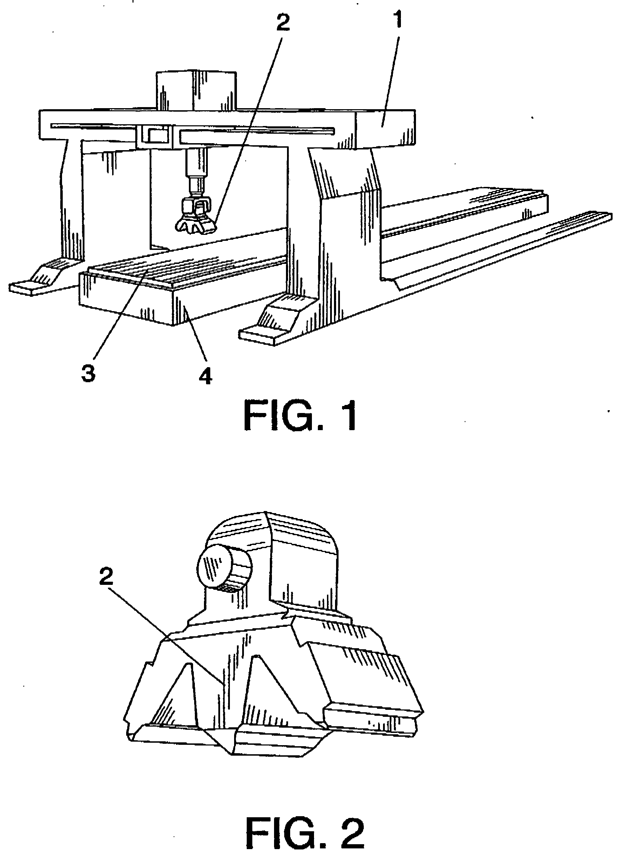

The device (1) corresponding to the procedure referred to can be seen in figure 1, with a positioner (4) on which a tool to be prepared and cleaned is positioned (3) and held under a robotic head (2) which has three different functional positions and in which three systems are integrated, each different from the other. The head (2) can be seen in figure 2, enlarged in relation to its size in figure 1 and separated from the rest of the device.

The three systems integrated into the head (2) consist of:
- A laser system with independent cleaning and drying functions, and with numerical control programs adapted to the needs of the areas of the tools (3) to be treated. It is envisaged that the device's (1) laser system will have a means of refrigeration by water and/or air and means of control that include the verification, control and recording of the settings, which include the angle of incidence of the laser, the distance to the tool, the power of the laser and the temperature of the laser.
- A releasing agent spraying system
- A blowing and aspiration system.

With these three systems integrated into the head (2), and in accordance with the three corresponding application positions, the procedure described above is used.

## Claims

1. A DEVICE (1) adapted for the preparation and cleaning of tools used for manufacturing components in composite material **characterised by** having a positioner (4) on which the tool is positioned(3) and held under a robotic head (2) to be prepared and cleaned, said positioner having three different functional positions, and in which the three following systems are integrated respectively:
- a laser system with independent cleaning and drying functions, and with numerical control programs adapted to the particular areas of the tools (3) to be treated, the device (1) comprising means of refrigeration and means of controlling the laser system;
- a releasing agent spraying system; and
- a blowing and suction system.

2. A DEVICE according to claim 1, wherein the means of control of the laser system consist in the verification, control and recording of the settings such as: the angle of incidence of the laser, the distance to the tool (3), the power of the laser and the temperature of the laser.

## Patentansprüche

1. Vorrichtung (1) angepasst an die Vorbereitung und Reinigung von Werkzeugen, die zur Herstellung von Komponenten aus Verbundwerkstoff verwendet werden, **dadurch gekennzeichnet, dass** sie einen Positionierer (4) aufweist, auf dem das Werkzeug angebracht ist (3) und unter einen Roboterkopf (2) gehalten wird, um vorbereitet und gereinigt zu werden, wobei der Positionierer drei unterschiedliche funktionelle Positionen aufweist, und wobei die drei folgenden Systeme jeweils integriert sind:
- Lasersystem mit unabhängigen Reinigungs- und Trocknungsfunktionen und mit numerischen Kontrollprogrammen, die für die jeweiligen zu behandelnden Bereiche der Werkzeuge (3) angepasst sind, wobei die Vorrichtung Kühlmittel und Mittel, die das Lasersystem kontrollieren, umfasst; und
- Trennmittelsprühsystem; und
- Blas- und Ansaugsystem.

2. Vorrichtung gemäß Anspruch 1, wobei die Mittel, die das Lasersystem kontrollieren, aus der Verfizierung, der Kontrolle und der Aufzeichnung der Einstellungen bestehen, wie zum Beispiel: Einfallwinkel des Lasers, Entfernung zum Werkzeug (3), Leistung des Lasers und Temperatur des Lasers.

## Revendications

1. Dispositif (1) adapté à la préparation et au nettoyage d'outils utilisés pour la fabrication de composants de matériau composite **caractérisé par** le fait d'avoir un positionneur (4) sur lequel l'outil est positionné (3) et maintenu sous une tête robotique (2) devant être préparée et nettoyée, le dit positionneur ayant trois positions fonctionnelles différentes et dans lesquelles les trois systèmes suivants sont intégrés respectivement :
- un système laser avec des fonctions indépendantes de nettoyage et de séchage et avec des programmes de contrôle numérique adaptés aux zones particulières des outils (3) à traiter, le dispositif (1) comprenant un moyen de réfrigération et un moyen de contrôle du système laser;
- un système de pulvérisation d'un agent de libération; et
- un système de soufflage et de succion.

2. Dispositif selon la revendication 1, dans lequel le moyen de contrôle du système laser consiste en la vérification, le contrôle et l'enregistrement des réglages tels que : l'angle d'incidence du laser, la distance à l'outil (3), la puissance du laser et la température du laser.
